# EUROPEAN PATENT APPLICATION

(11) **EP 2 101 471 A1**
(43) Date of publication of application: **16.09.2009**
(21) Application number: 08152632.9
(22) Date of filing: 12.03.2008
(51) Int. Cl.: H04L 29/08

(54) **Method and apparatus for predictive downloading of attachments**

(71) Applicant: Research In Motion Limited, Waterloo, Ontario N2L 3W8 (CA)
(72) Inventor: Evans, Jeremy, Oshawa Ontario L1J 6J2 (CA)
(74) Representative: Rickard, David John

(57) **Abstract**

An electronic device and a method implemented within the electronic device are set forth for predictive downloading of attachments on an electronic device, comprising receiving an email having an attachment, maintaining a database of attachment historical download data, comparing information relating to the attachment to predetermined criteria derived from the attachment historical download data and in the event the information matches the criteria then downloading and saving the attachment in cache memory, and updating the database of attachment historical download data.

## Description

The present specification relates generally to displaying content on mobile communication devices, and in particular to predictive downloading of attachments for display on mobile communication devices.

Mobile communication devices are ubiquitous for business and personal use. Handheld mobile communication devices, sometimes referred to as mobile stations, are essentially portable computers having wireless capability, and come in various forms. These include Personal Digital Assistants (PDAs), cellular phones and smart phones. While their reduced size is an advantage to portability, bandwidth and processing constraints of such devices present challenges to the downloading and viewing of attachments, such as word processing documents, audio files, tables and images, which have been created using various computer programs, such as word processors, audio recording software, spreadsheet programs, financial software, and presentation software, etc. In addition, viewing even a portion of a downloaded attachment on the device consumes substantial device CPU/memory/battery resources.

Consequently, users of such devices tend to be selective in choosing which attachments to download. For example, a user may tend to download attachments of certain types (e.g. DOC, JPG, etc.), but not other types (e.g. WAV, PDF, etc.) A user may be more likely to download attachments received from particular senders but not from others. Some users are more likely to download attachments at certain times of day, or based on the size of the attachments (e.g. more likely to download attachments that are <50k).

It is known in the art to provide streaming of certain media, such as audio and video, to mobile devices, using protocols such as the media server profile of Session Initiation Protocol (SIP), as specified in RFC 4240 (Burger, E., "Basic Network Media Services with SIP", RFC 4240, December 2005), or MSCML (Van Dyke, J., Burger, E., and A. Spitzer, "Media Server Control Markup Language", RFC 4722, Dec 2006). The decision to make use of streaming services is usually predicated on the content type of the message part. Using the capabilities of the Internet Message Access Protocol (IMAP) FETCH command, a device client determines the Multipart Internet Mail Extension (MIME) Content-Type of particular message parts and based on local policies or heuristics, makes a decision whether or not to attempt streaming. Streaming the media to the device addresses both the latency issue (since the device can start playing the media immediately), and the storage issue (since the client does not need to store the media locally). However, the media cannot be viewed or played when the device is offline.

### GENERAL

In general, a heuristic method is set forth for predictive downloading of attachments to a mobile communication device based on historical user downloading behaviour.

According to one aspect, there may be provided a method of predictive downloading of attachments on an electronic device, said method comprising receiving an email having an attachment, maintaining a database, and downloading and saving said attachment in cache memory, **characterized in that** said database comprises data indicative of historical attachment downloading patterns; said method further comprises comparing information relating to said attachment to predetermined criteria derived from said data and in the event said information matches said criteria then downloading and saving said attachment in said cache memory, and updating said database.

According to another embodiment, there may be provided an electronic device, comprising: a communications subsystem for receiving an email having an attachment; a database; and a cache memory; **characterized in that** said database comprises data indicative of historical attachment downloading patterns; and a content handling application is provided for comparing information relating to said attachment to predetermined criteria derived from said data and in the event said information matches said criteria then downloading and saving said attachment in said cache memory, and updating said database.

### BRIEF DESCRIPTION OF THE DRAWINGS

The embodiments will be better understood with reference to the following Figures in which like numerals denote like parts and in which:

Figure 1 is a schematic diagram of a wireless communication system;

Figure 2 is a block diagram of components of a portable electronic device according to an embodiment; and

Figure 3 is a flowchart showing steps of an exemplary method for predictive downloading of attachments to the mobile communication device of Figure 2.

### DESCRIPTION OF PREFERRED EMBODIMENTS

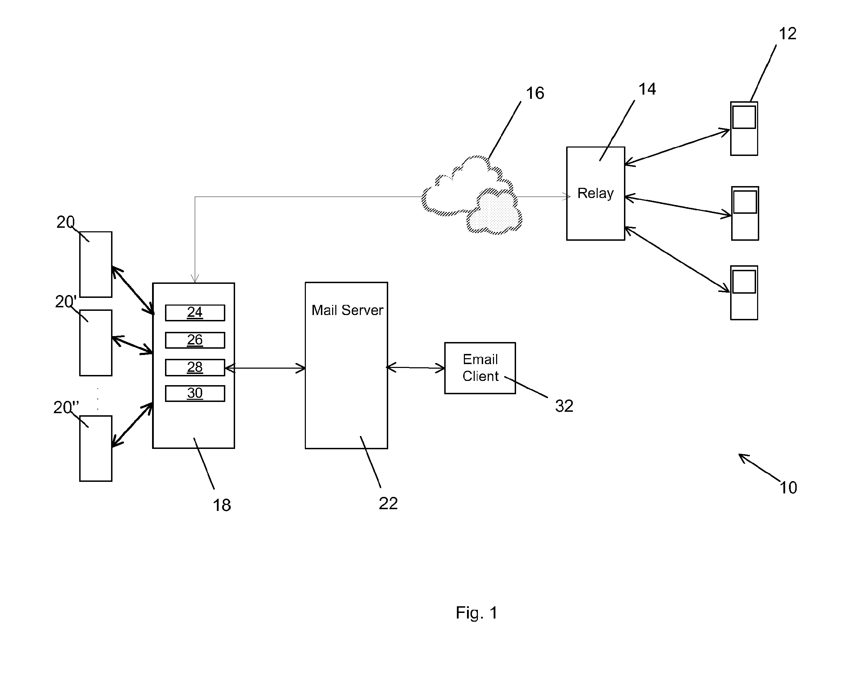

Referring now to Figure 1, a communication system 10 is shown for facilitating communication with and between portable electronic devices 12. Each portable electronic device 12 is operable to effect communications over a radio communications channel with a base station (not shown) while located within a coverage area that is defined by the base station. The base station is part of a wireless network that is in communication with the Internet 16. Data is delivered to the portable electronic device 12 via wireless transmission from the base station. Similarly, data is sent from the portable electronic device 12 via wireless transmission to the base station.

It will be appreciated that the portable electronic device 12 is movable within the coverage area and can be moved to coverage areas defined by other base stations. A relay 14 is provided to route data, such as email messages, for example, between the Internet 16 and the base station of the portable electronic device 12. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests received from the portable electronic device 12 via the Internet 16. A firewall or a proxy server (not shown) may also be provided between the server 18 and the Internet 16. The server 18 includes a router 24, a dispatcher 26, an agent 28 and an attachment server process 30.

A mail server 22 communicates with the server 18 to exchange emails with an email client 32 such as Microsoft Outlook^{™}. The agent 28 sends compressed copies of emails received at the mail server 22 to the portable electronic device 12 via the dispatcher 26, the router 24 and the relay 14. Typically, multiple email clients 32 communicate with the mail server 22. Emails originating from the email clients are stored at the mail server 22 before being compressed at server 18 and sent out over the Internet. Similarly, emails received from the Internet are decompressed and transmitted to the email clients 32 via the server 18 and the mail server 22

The server 18 uses attachment server process 30 to process attachment data from the mail server 22 (e.g. documents, spreadsheets, presentations, etc.). Additional attachment server processes 20, 20' and 20" may reside on additional servers in communication with the attachment server process 30 and with one another to create an attachment server network. It will be appreciated that any number of attachment server processes (hereinafter referred to as attachment servers) may be provided. The number of attachment servers may be selected based on the number of portable electronic devices 12 communicating with the server 18.

Also, although server 18 is described as including an attachment server, it may alternatively be limited to non-attachment server functions but in communication with one or more attachment servers for processing attachment data.

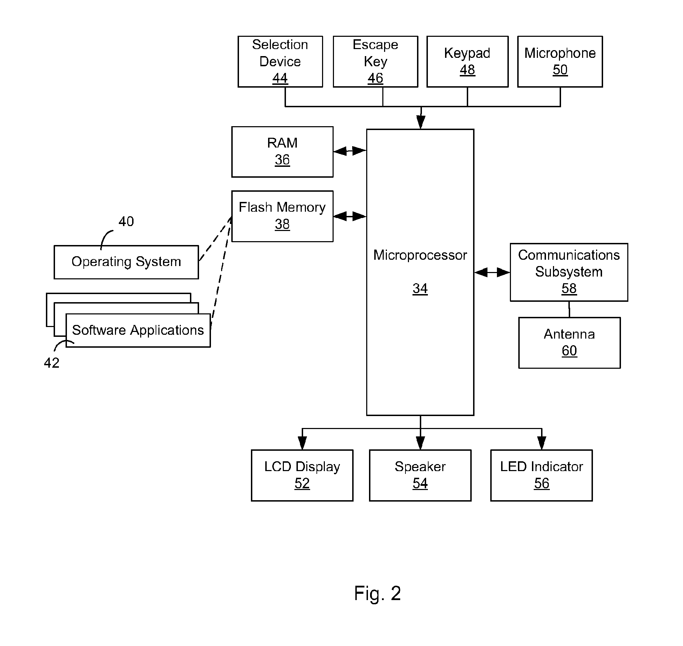

Referring now to Figure 2, a block diagram of certain components, including internal components within the portable electronic device 12, is shown. The portable electronic device 12 includes a microprocessor 34 connected to a random access memory (RAM) 36 and a persistent storage device, which in the present embodiment is a flash memory 38 that is responsible for various non-volatile storage functions of the portable electronic device 12. Operating system software 40 executable by the microprocessor 34 is stored in the flash memory 38. It will be appreciated, however, that the operating system software 40 can be stored in other types of memory such as read-only memory (ROM). In the present embodiment, software applications 42 are stored in the persistent storage device 38 for execution by the microprocessor 34 for carrying out various functions, as discussed in greater detail below. The microprocessor 34 receives input from various input devices including a selection device 44 such as a thumbwheel or trackball, for example, an escape key 46, a keypad 48 and a microphone 50 and outputs to various output devices including an LCD display 52, a speaker 54 and an LED indicator 56.

The mobile device 12 may send and receive communication signals over the wireless network after required network registration or activation procedures have been completed. Network access is associated with a subscriber or user of the mobile device 12 via a SIM/RUIM card (i.e. Subscriber Identity Module or a Removable User Identity Module) within the communication subsystem 58. The SIM card (not shown) or RUIM is one type of a conventional "smart card" that can be used to identify a subscriber of the mobile device 12 and to personalize the mobile device, among other things.

In a data communication mode, a received signal such as an email message or Web page is processed by the communications subsystem 58 and input to the microprocessor 34 for further processing and output to the LCD display 52. A user of the portable electronic device 12 can also compose data items within a software application such as messaging application, using the keypad 48, for example, in conjunction with the selection device 44 and the LCD display 52. Such composed items can then be transmitted over the communications network through the communications subsystem 58 and antenna 60.

For voice communications, the overall operation of the mobile device 12 is substantially similar, except that the received signals are output to the speaker 54, and signals for transmission are generated by the microphone 50. Alternative voice or audio I/O subsystems, such as a voice message recording subsystem, can also be implemented on the mobile device 12. Although voice or audio signal output is accomplished primarily through the speaker 54, the display 52 can also be used to provide additional information such as the identity of a calling party, duration of a voice call, or other voice call related information.

As indicated above, the flash memory 38 stores a plurality of applications 42 executable by the microprocessor 34, such as a message application for allowing a user to send and receive electronic messages, an attachment content handling application, which operates in conjunction with the message application to provide the user with attachment content handling options for messages that have an associated attachment. The attachment may be a document converted to plain text, an audio file compressed to WAV or an image file, for example. Once the user selects an attachment document for viewing according to a preferred attachment content handling option, the attachment content handling application generates a request for one or more of the attachment servers 30, 20, 20', 20" to download the transcoded/compressed attachment, which can thereafter be viewed/played using an attachment viewer application.

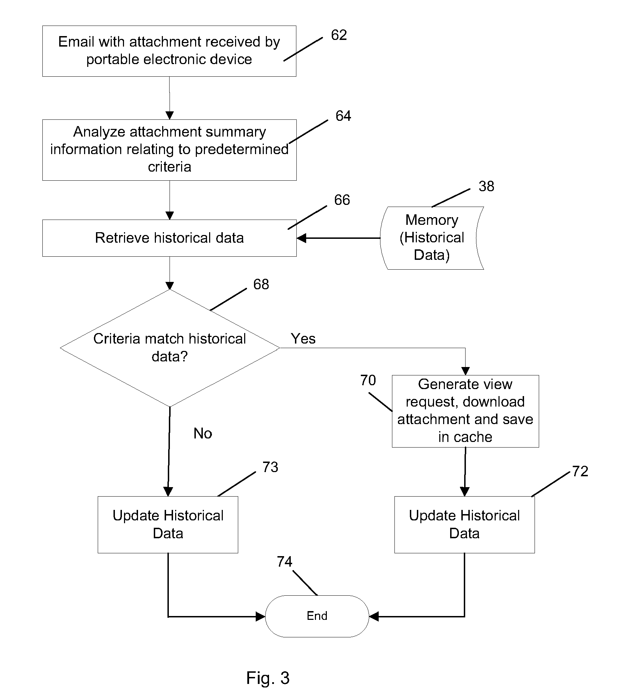

However, as discussed in greater detail below with reference to Figure 3, according to the exemplary embodiment the content handling application performs an assessment of attachment data according to heuristic methods, and automatically issues the view request for downloading the attachment to cache memory (without requiring any user intervention) if the attachment data meets predefined criteria, such that the attachment is available for immediate viewing/playing upon user opening of the email.

In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

Figure 3, in conjunction with Figures 1 and 2, sets forth steps of an exemplary method for predictive downloading of attachments from attachment server 20 (or one or more of servers 30, 20, 20', 20") to mobile communication device 12. At step 62, an email having an associated attachment, is received at the device 12. The content handling application then evaluates attachment summary (or other relevant) information for the attachment based on heuristic data relating to predetermined criteria (described below). The application analyzes the attachment summary information forwarded to the device 12 by the server (step 64), as described for example in Patent Publication No. US/2006/0047729, dated March 2, 2006, the contents of which are incorporated herein by reference. The application then retrieves historical data saved in memory 38 (step 66) indicative of the user's preferences when downloading attachments (e.g. such as type of document, sender, time of receipt and/or size of the attachment ) and if one or more attachment criteria determined in step 64 matches the historical data (i.e. a YES at step 68), then the application automatically downloads and stores the attachment in cache memory 36 (step 70) so that the attachment is ready for immediate viewing/playing when the user opens the email. The historical downloading pattern data is then updated in memory 38 (step 72). Otherwise, if the criteria do not match (i.e. a NO at step 68), then the historical downloading pattern data is updated in memory 38 (step 73) and the method ends (step 74). A person of ordinary skill in the art will appreciate that well known heuristic learning methods may be used to develop the historical data stored in memory 38, based on a user's download history.

According to one embodiment, at step 64 the content handling application parses the attachment to determine attachment type (e.g. DOC, PDF, WAV, JPG, etc.) and at step 68 compares the attachment type to a list of types that the user is more likely to download than other attachment types, based on the user's historical downloading patterns (step 66). If the attachment type matches (i.e. a YES at step 68), the attachment is automatically downloaded and saved (step 70) and the historical downloading pattern data is updated in memory 38 (step 72).

According to another embodiment, which may be preceded or followed by, or executed concurrently with the steps set forth in the previous paragraph, at step 64 the content handling application parses the attachment to determine the email address of the sender and compares the email address to a list of email addresses of senders from whom the user is more likely to download attachments than other senders, based on the user's historical downloading patterns. If the email address matches, (i.e. a YES at step 68), the attachment is automatically downloaded and saved (step 70) and the historical downloading pattern data is updated in memory 38 (step 72).

According to another embodiment, which may be preceded or followed by, or executed concurrently with the steps set forth in the one or both of the two previous paragraphs, at step 64 the content handling application determines the time of day and compares the time of day to a range of times during which the user is more likely to download attachments than at other times, based on the user's historical downloading patterns. If the time of day falls into one of those ranges, (i.e. a YES at step 68), the attachment is automatically downloaded and saved (step 70) and the historical downloading pattern data is updated in memory 38 (step 72).

According to yet another embodiment, which may be preceded or followed by, or executed concurrently with the steps set forth in the one or more of the three previous paragraphs, at step 64 the content handling application parses the attachment to determine the size of the attachment and compares the size to a threshold attachment size value below which the user is more likely to download attachments than larger attachments, based on the user's historical downloading patterns. If the size is equal or less than the threshold attachment size value, (i.e. a YES at step 68), the attachment is automatically downloaded and saved (step 70) and the historical downloading pattern data is updated in memory 38 (step 72).

A person of ordinary skill in the art will appreciate that the criteria set forth in Figure 3 for evaluating the attachment, is purely exemplary. Other criteria may also or alternatively be used, such as importance of email, sender's domain, etc.

It will also be appreciated that the steps set forth in Figure 3 are executed without user intervention. Provided that the attachment information matches the heuristically developed data, the device 12 automatically issues a view request to the server 18 for downloading the attachment and storing it in cache memory 36 such that the attachment is available for immediate viewing upon user opening of the email.
Specific embodiments have been shown and described herein. However, modifications and variations may occur to those skilled in the art. For example, although the exemplary embodiment has been described in terms of implementation on a portable handheld electronic device, the principles set forth herein may be applied to other devices such as desktop computers, etc. All such modifications and variations are believed to be within the sphere and scope of the present embodiment.

## Claims

1. A method of predictive downloading of attachments on an electronic device (12), said method comprising receiving an email having an attachment, maintaining a database (38), and downloading and saving said attachment in cache memory (36), wherein
said database comprises data indicative of historical attachment downloading patterns;
said method further comprises comparing information relating to said attachment to predetermined criteria derived from said data and in the event said information matches said criteria then downloading and saving said attachment in said cache memory (36), and updating said database (38).

2. A method as claimed in claim 1, wherein said predetermined criteria comprise at least one of attachment type, sender, time of receipt, and size of attachment.

3. A method as claimed in claim 1 or claim 2, wherein said comparing further comprises any of:
parsing the attachment to determine attachment type and comparing the attachment type to a list of types that are likely to be downloaded, based on said historical attachment downloading patterns;
parsing the attachment to determine a sender address of said email and comparing the sender address to a list of email addresses of senders from whom the user is likely to download attachments, based on said historical attachment downloading patterns;
determining the time of receipt of said email and comparing the time of receipt to a range of times during which it is likely that attachments will be downloaded, based on said historical attachment downloading patterns; or
parsing the attachment to determine attachment size and comparing the attachment size to a threshold attachment size value below which attachments are likely to be downloaded, based on said historical attachment downloading patterns.

4. An electronic device (12), comprising:
a communications subsystem (58) for receiving an email having an attachment;
a database (38); and
a cache memory (36); wherein said database comprises data indicative of historical attachment downloading patterns; and a content handling application (42) is provided for comparing information relating to said attachment to predetermined criteria derived from said data and in the event said information matches said criteria then downloading and saving said attachment in said cache memory (36), and updating said database (38).

5. An electronic device (12) as claimed in claim 4, wherein said predetermined criteria comprise at least one of attachment type, sender, time of receipt, and size of attachment.

6. An electronic device (12) as claimed in claim 4 or claim 4, wherein said content handling application (42) is arranged to do any of:
parse the attachment to determine attachment type and compare the attachment type to a list of types that are likely to be downloaded, based on said historical attachment downloading patterns;
parse the attachment to determine a sender address of said email and compare the sender address to a list of email addresses of senders from whom the user is likely to download attachments, based on said historical attachment downloading patterns;
determine the time of receipt of said email and compare the time of receipt to a range of times during which it is likely that attachments will be downloaded, based on said historical attachment downloading patterns; or
parse the attachment to determine attachment size and compare the attachment size to a threshold attachment size value below which attachments are likely to be downloaded, based on said historical attachment downloading patterns.

7. A computer readable medium containing computer-executable instructions (42) that, when performed by a processor (34), cause said processor to implement the steps of the method of any one of claims 1 to 3.

## Amended claims

### Amended claims in accordance with Rule 137(2) EPC.

**1.** A method of predictive downloading of attachments on an electronic device (12), said method comprising receiving an email having an attachment, maintaining a database (38), and downloading and saving said attachment in cache memory (36), wherein
said database comprises data indicative of historical attachment downloading patterns;
said method further comprises comparing information relating to said attachment to predetermined criteria derived from said data and in the event said information matches said criteria then downloading and saving said attachment in said cache memory (36), and updating said database (38).

**2.** A method as claimed in claim 1, wherein said predetermined criteria comprise at least one of attachment type, sender, time of receipt, and size of attachment.

**3.** A method as claimed in claim 1 or claim 2, wherein said comparing further comprises parsing the attachment to determine attachment type and comparing the attachment type to a list of types that are likely to be downloaded, based on said historical attachment downloading patterns.

**4.** A method as claimed in claim 1, 2 or 3, wherein said comparing further comprises parsing the attachment to determine a sender address of said email and comparing the sender address to a list of email addresses of senders from whom the user is likely to download attachments, based on said historical attachment downloading patterns.

**5.** A method as claimed in claim 1, 2, 3 or 4, wherein said comparing further comprises determining the time of receipt of said email and comparing the time of receipt to a range of times during which it is likely that attachments will be downloaded, based on said historical attachment downloading patterns.

**6.** A method as claimed in any preceding claim wherein said comparing further comprises parsing the attachment to determine attachment size and comparing the attachment size to a threshold attachment size value below which attachments are likely to be downloaded, based on said historical attachment downloading patterns.

**7.** An electronic device (12), comprising:
a communications subsystem (58) for receiving an email having an attachment;
a database (38); and
a cache memory (36); wherein said database comprises data indicative of historical attachment downloading patterns; and a content handling application (42) is provided for comparing information relating to said attachment to predetermined criteria derived from said data and in the event said information matches said criteria then downloading and saving said attachment in said cache memory (36), and updating said database (38).

**8.** An electronic device (12) as claimed in claim 7, wherein said predetermined criteria comprise at least one of attachment type, sender, time of receipt, and size of attachment.

**9.** An electronic device (12) as claimed in claim 7 or claim 8, wherein said content handling application (42) is arranged to parse the attachment to determine attachment type and compare the attachment type to a list of types that are likely to be downloaded, based on said historical attachment downloading patterns.

**10.** An electronic device (12) as claimed in claim 7, 8 or 9 wherein said content handling application (42) is arranged to parse the attachment to determine a sender address of said email and compare the sender address to a list of email addresses of senders from whom the user is likely to download attachments, based on said historical attachment downloading patterns.

**11.** An electronic device (12) as claimed in claim 7, 8, 9 or 10 wherein said content handling application (42) is arranged to determine the time of receipt of said email and compare the time of receipt to a range of times during which it is likely that attachments will be downloaded, based on said historical attachment downloading patterns.

**12.** An electronic device (12) as claimed in any of claims 7 to 11 wherein said content handling application (42) is arranged to parse the attachment to determine attachment size and compare the attachment size to a threshold attachment size value below which attachments are likely to be downloaded, based on said historical attachment downloading patterns.

**13.** A computer readable medium containing computer-executable instructions (42) that, when performed by a processor (34), cause said processor to implement the steps of the method of any one of claims 1 to 6.
